Europäisches Patentamt

European Patent Office

Office européen des brevets

(11) Publication number: 0 269 242
A2

## EUROPEAN PATENT APPLICATION

(21) Application number: 87309221.7

(22) Date of filing: 19.10.87

(51) Int. Cl.4: B60C 11/00 , B60C 19/00

(30) Priority: 21.11.86 JP 278123/86

(43) Date of publication of application:
01.06.88 Bulletin 88/22

(84) Designated Contracting States:
DE FR GB

(71) Applicant: HONDA GIKEN KOGYO KABUSHIKI KAISHA
1-go, 1-ban, Minami-Aoyama 2-chome
Minato-ku Tokyo 107(JP)

(72) Inventor: Nirei, Toru c/o Kabushiki Kaisha Honda
Gijutsu Kenkyusho 4-1, Chuo 1-chome
Wako-shi Saitama-ken(JP)
Inventor: Ikegami, Hiroyuki c/o Kabushiki Kaisha Honda
Gijutsu Kenkyusho 4-1, Chuo 1-chome
Wako-shi Saitama-ken(JP)
Inventor: Yoshimura, Yuichi c/o Kabushiki Kaisha Honda
Gijutsu Kenkyusho 4-1, Chuo 1-chome
Wako-shi Saitama-ken(JP)

(74) Representative: Leale, Robin George et al
FRANK B. DEHN & CO. Imperial House 15-19 Kingsway
London WC2B 6UZ(GB)

(54) Vehicle wheel structure.

(57) Disclosed is a vehicle wheel structure in which a tubeless pnumatic tire (3,13,23) is fitted over a wheel (1,11,21,31) and at least two walls (9,19,29,34) project in substantially radial directions from an outer circumferential surface of the wheel into the annular chamber defined between the tire and the wheel. These walls prevent the generation of standing waves or air column resonance inside the tire and thus contribute to the overall reduction of the road noise of the vehicle. The inner ends of the walls (9,19,29,34) may be either bonded to an annular member which surrounds the wheel or pivoted to a similar annular member and biased into their radial or upright positions by a spring member (37), in such a manner as not to interfere with the replacement of the tire. Alternatively, the walls (29) may consist of inflatable bags which may be inflated into radial positions and deflated into flat positions.

FIG. 2

## VEHICLE WHEEL STRUCTURE

The present invention relates to an improved vehicle wheel structure in which resonance of an air column defined in the tire is reduced or prevented, for the purpose of reducing road noise.

As engine noise and wind noise of automobiles are reduced as a result of continued efforts to reduce the overall noise of automobiles, the noise arising from the tires rolling over the road surface has presented itself as a major source of the running noise of an automobile. Tire noise is generated in part by collision between a tire tread and a road surface and it is possible to reduce the level of this noise to a certain extent by modifying the tread pattern. However, since an annular chamber is defined in a tire and this chamber functions as an air column, having a resonance frequency of about 250Hz in the case of a passenger car, the resulting resonance noise accounts for a major part of the overall noise, and this noise is required to be reduced.

Such an air column resonance, which can be considered as a sonic standing wave, can be suppressed by dividing the air column with partition, walls forming part of the tire, or filling the air column with material having a sound absorbing property, but since this means an addition to the mass of the tire and this addition of mass tends to be uneven in the circumferential direction, the high speed performance of the tire tends to be impaired and such attempts have therefore not been considered as practical. Japanese Utility Model Laid Open Publication No. 58-97005 discloses a tire having a plurality of partition walls integrally formed with the tire in the interior of the same, but these partition walls are provided for the purpose of increasing the rigidity of the tire for use in agricultural machinery and this concept is not applicable to tires for high speed cruising.

According to the present invention there is provided a vehicle wheel arranged to have a tubeless pneumatic tire fitted thereon, characterized by at least two walls arranged to project in substantially radial directions from an outer circumferential surface of the wheel into the annular chamber defined between the tire and the wheel.

According to a preferred feature of the invention the inner ends of the said walls are connected to an annular member which closely surrounds the outer circumferential surface of the wheel. The walls may be simply bonded to the annular member, or pivotally connected to the annular member with spring members biasing the walls into radial positions. Thus, the replacement of the tire can be accomplished without any undue difficulty. Alternatively, the walls may consist of inflatable bags.

The walls may be arranged at equal intervals in the circumferential direction so as to minimize any imbalance in the wheel and tire assembly, or they may be arranged at unequal intervals in the circumferential direction so as to suppress the generation of a standing wave while using as few walls as possible.

Some embodiments of the invention will now be described by way of example and with reference to the accompanying drawings, in which:-

Figure 1 is a side view of a wheel and a tire according to a first embodiment of the present invention;

Figure 2 is a sectional view taken along line II-II of Figure 1;

Figures 3 and 4 are views similar to Figure 2 showing a second and a third embodiment of the present invention, respectively; and

Figure 5 is a partial perspective view of a fourth embodiment of the present invention.

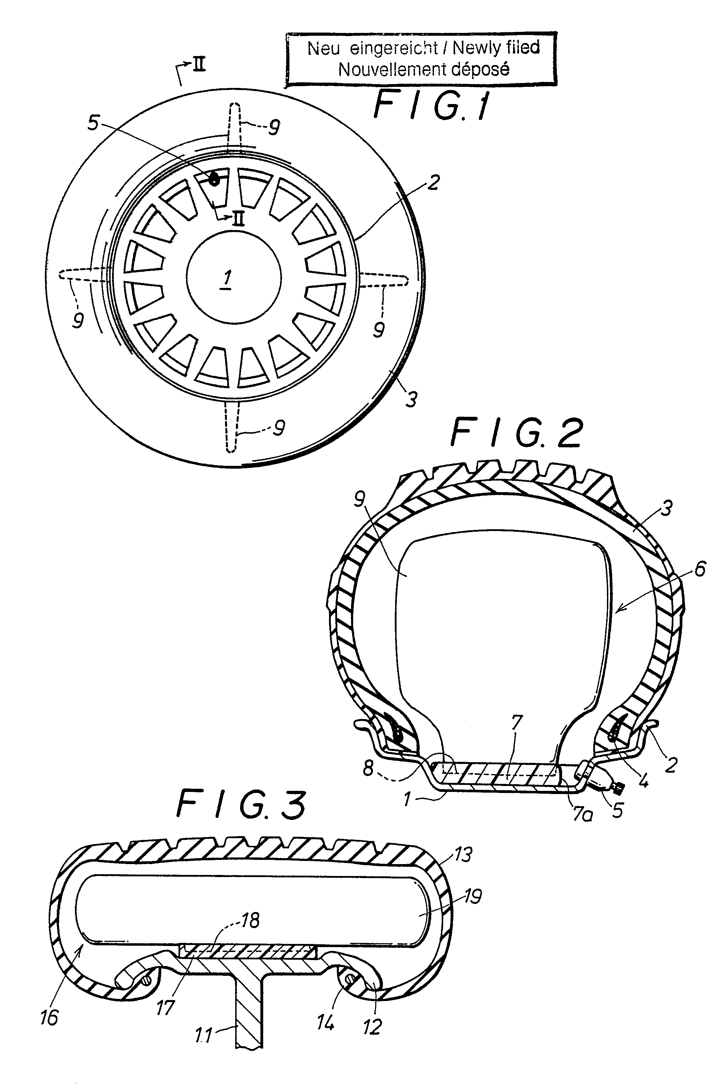

Figures 1 and 2 show a first embodiment of the present invention in which beads 4 of a pneumatic tire 3 are engaged to the rim 2 of a wheel 1 made of steel or aluminum alloy and an annular chamber thus defined between the tire 3 and the wheel 1 is filled with compressed air. A valve 5 is fitted to the wheel for filling this annular chamber with compressed air.

The outer circumferential surface of the wheel 1 is closely surrounded by an annular member 7 which may be made of, for instance, urethane resin formed in situ over the outer circumferential surface of the wheel. The outer circumferential surface of this annular member 7 is provided with a plurality (four in the case of the present embodiment) of axial grooves 8, located for instance at equal intervals in the circumferential direction. Each of these grooves 8 mounts the inner or base end of a wall member 9 by way of a bonding agent for bonding these two members together. The annular member 7 is formed with a notch 7a for avoiding interference with the valve 5. Thus, in the present embodiment, a partition wall assembly 6 comprising the annular member 7 and the four wall members 9 is added to a conventional wheel structure.

By thus forming partition walls inside the annular chamber defined in a tire, an air column resonance, for instance having a basic frequency of 250 Hz, can be prevented and road noise can thus be significantly reduced. Further, by installing the tire 3 on the wheel 1 after the annular member 7 has ben fitted around the wheel, and thereafter attaching the wall members 9 to the annular member 7, the partition wall assembly 6 will not obstruct fitting of the tire 3 over the wheel 1. If required, the configuration of the wheel 1 can be modified for the purpose of facilitating the fitting of the tire.

Figure 3 shows a second embodiment of the present invention and parts corresponding to those of the previous embodiment are denoted with like numerals and their detailed description is omitted.

Whereas in the previous embodiment the beads 4 of the tire 3 are fitted to the inside of the wheel rim 2, in this embodiment the beads 14 of the tire 13 are fitted over the external surfaces of the wheel rim 12 of a wheel 11. Therefore, in this embodiment, fitting of the tire onto the wheel 11 is very simple and it is possible either to use a partition wall assembly consisting of an annular member 18 and a plurality of wall members 19 which are separate from the annular member 18, or to use a partition wall asembly consisting of an integral structure.

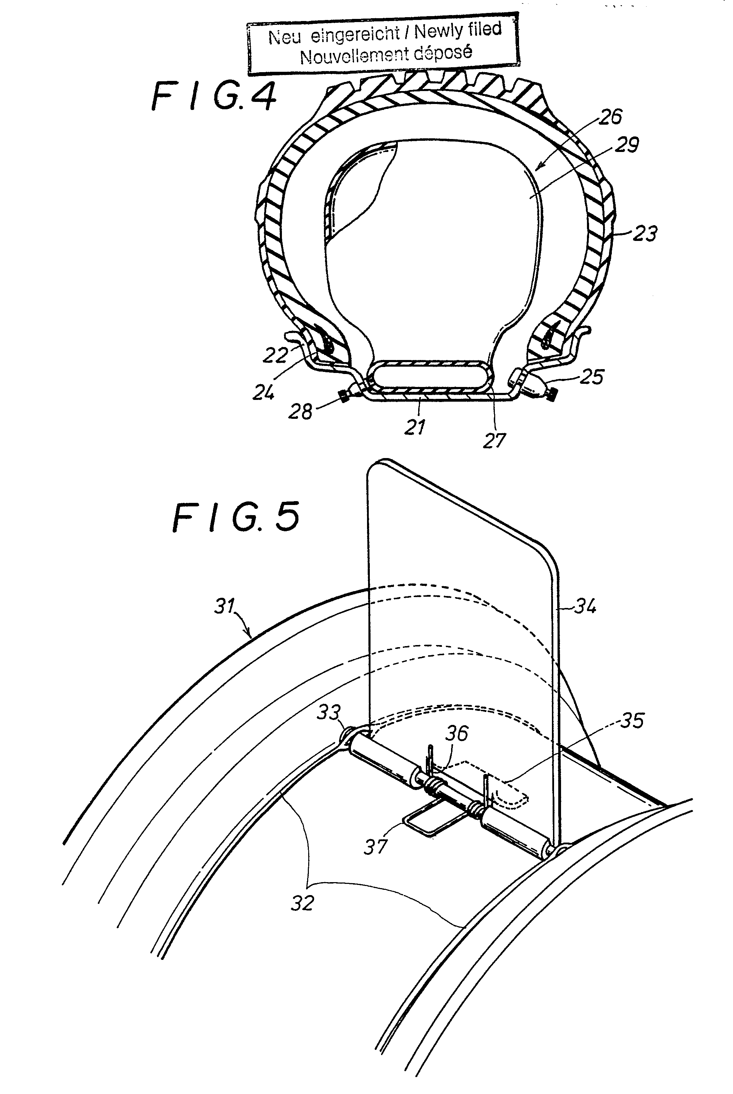

Figure 4 shows a third embodiment of the present invention in which a partition wall assembly 26 made of a hollow rubber-like material having an annular portion 27 and wall portions 29 is used, and the wall portions 29 are arranged at four locations at equal intervals in the circumferential direction. An air valve 28 extends through a part of the wheel 21 in an air-tight manner for the purpose of supplying compressed air into the partition wall assembly 26. The air valve 28 may be located as illustrated or, alternatively, on the same side of the wheel as the air valve 25 but diagonally opposite to it in order to achieve an overall balance of the wheel.

In this third embodiment, by filling or removing compressed air into or out of the partition wall assembly 26, the operation of replacing the tire 23 is facilitated.

Figure 5 shows a fourth embodiment of the present invention. In this embodiment, a pair of steel wires 32 covered with rubber material are passed around the wheel 31 with a suitable means, and four pivot shafts 33 are bridged across the steel wires 32, for instance at equal intervals in the circumferential direction. A wall member 34 is hinged at both sides of its base end to each of these pivot shafts 33 and is provided at its inner end with an extension 35 extending in a perpendicular direction relative to the major surface of the wall member 34 in such a manner that the wall member 34 may be rotated between a position which is tangential to the wheel 31 and a position which is radial relative to the wheel.

Further, the inner end of the wall member 34 is provided with a notch 36 so as to accommodate therein a torsion coil spring 37 which is wound around the pivot shaft 33 and biases the wall member towards its radial position.

Thus, according to this fourth embodiment, since the wall members 34 may be collapsed along tangential directions of the wheel 31 and may be allowed to protrude in the radial direction under the spring force of the torsion coil springs 37 after the tire has been fitted into the wheel 31, partition walls for preventing air column resonance can be provided without interfering with the replacement of the tire.

Thus, according to these embodiments, since an air column resonance in a tire can be effectively prevented and the road noise of the wheel can be reduced without sacrificing the performance of the tire or the ease of fitting a tire onto a wheel, a significant advantage can be obtained in improving the riding comfort of the vehicle.

If the walls 9,19,29 and 34 are spaced unevenly around the wheel, generation of a standing wave can be suppressed with a small number of walls, e.g. only two, because the nodes and antinodes of the air column resonance or the standing wave appear at equal intervals in the circumferential direction, so if the walls are spaced unevenly all of the walls will not coincide with the nodes of any low order resonance mode or standing wave.

It is to be clearly understood that there are no particular features of the foregoing specification, or of any claims appended hereto, which are at present regarded as being essential to the performance of the present invention, and that any one or more of such features or combinations thereof may therefore be included in, added to, omitted from or deleted from any of such claims if and when amended during the prosecution of this application or in the filing or prosecution of any divisional application based thereon.

## Claims

1. A vehicle wheel (1,11,21,31) arranged to have a tubeless pneumatic tire (3,13,23) fitted thereon, characterized by at least two walls (9,19,29,34) arranged to project in substantially radial directions from an outer circumferential surface of the wheel into the annular chamber defined between the tire and the wheel.

2. A vehicle wheel as claimed in claim 1, wherein the inner ends of the said walls are connected to an annular member (7,17,27,32) which closely surrounds the outer circumferential surface of the wheel.

3. A vehicle wheel as claimed in claim 2, wherein the said inner ends of the walls (9,19) are fixedly bonded to the said annular member (7,17).

4. A vehicle wheel as claimed in claim 2, wherein the said inner ends of the walls (34) are pivoted to the said annular member and the walls are biased into their radially extending positions.

5. A vehicle wheel as claimed in claim 2, wherein at least the said walls (29) consist of inflatable bags.

6. A vehicle wheel as claimed in any preceding claim, wherein the said walls (9,19,29,34) are arranged at equal intervals in the circumferential direction.

7. A vehicle wheel as claimed in any of claims 1 to 5, wherein the said walls are arranged at unequal intervals in the circumferential direction.

0 269 242

**F I G . 1**

**F I G . 2**

**F I G . 3**

FIG.4

26
29
23
22
24
28
21
27
25

FIG.5

31
34
33
35
36
37
32